# EUROPÄISCHE PATENTSCHRIFT

(11) **EP 2 678 572 B1**
(45) Veröffentlichungstag und Bekanntmachung des Hinweises auf die Patenterteilung: **26.08.2015**
(21) Anmeldenummer: 12707701.4
(22) Anmeldetag: 23.02.2012
(51) Int. Cl.: F16B 9/02, H01Q 1/12, F16B 5/06, F16B 17/00, B21D 39/03, F16B 21/08, F16B 5/00

(54) **HALTE- UND VERANKERUNGSEINRICHTUNG AN EINER METALLPLATTE ZUR BEFESTIGUNG EINES FUNKTIONSTRÄGERS SOWIE EIN ZUGEHÖRIGES VERFAHREN ZUR HERSTELLUNG EINER DERARTIGEN HALTE- UND VERANKERUNGSEINRICHTUNG**
RETAINING AND ANCHORING DEVICE ON A METAL PLATE FOR FASTENING A FUNCTIONAL SUPPORT, AND AN ASSOCIATED METHOD FOR PRODUCING SUCH A RETAINING AND ANCHORING DEVICE
DISPOSITIF DE RETENUE ET D'ANCRAGE AU NIVEAU D'UNE PLAQUE DE MÉTAL POUR FIXER UN SUPPORT FONCTIONNEL ET PROCÉDÉ ASSOCIÉ POUR PRODUIRE UN DISPOSITIF DE RETENUE ET D'ANCRAGE DE CE TYPE

(30) Priorität: 24.02.2011 DE 102011012283
(43) Veröffentlichungstag der Anmeldung: 01.01.2014
(73) Patentinhaber: Kathrein-Werke KG, 83022 Rosenheim (DE)
(72) Erfinder: FRÖHLER, Christian, 83128 Halfing (DE); GÜNTHER, Mario, 83059 Kolbermoor (DE); OBERMAIER, Johann, Baptist, 83104 Weiching (DE)
(74) Vertreter: Flach, Dieter Rolf Paul
(86) Internationale Anmeldenummer: PCT/EP2012/000784
(87) Internationale Veröffentlichungsnummer: WO 2012/113560

(56) Entgegenhaltungen:
- WO-A1-02/074612
- DE-A1- 2 846 943
- DE-A1- 3 130 470
- DE-A1- 10 226 668
- DE-C1- 19 723 415
- FR-A- 1 135 901
- FR-A- 1 402 072
- JP-A- 8 042 659
- JP-A- 61 164 028
- US-A- 1 294 486
- US-A- 3 024 525
- US-A- 3 389 931
- US-A- 5 155 897
- US-A- 6 146 072
- US-A1- 2007 228 350

## Beschreibung

Die Erfindung betrifft eine Halte- und Verankerungseinrichtung mit einem Funktionsträger nach dem Oberbegriff des Anspruches 1.

In vielen Fällen ist es notwendig, an Metallplatten oder Metallblechen andere Funktionsteile zu befestigen. Dies kann grundsätzlich durch Verschweißen, evtl. durch Vernieten, durch Verschrauben etc. erfolgen.

Im Mobilfunk werden in der Regel mehrere Strahlereinrichtungen, gleichgültig ob sie beispielsweise einfach oder dualpolarisiert sind, häufig in einer oder in mehreren Spalten in einer Anbaurichtung (üblicherweise in Vertikalrichtung) im Abstand zueinander vor einem Reflektor montiert. Der Reflektor bildet dabei die Außenhaut der Antenne, wobei auf dem Reflektor auf der die Strahler aufnehmenden Seite ein die Strahler schützendes Radom angebracht ist. Daneben müssen auf dem Reflektor eine Vielzahl von Funktionsteilen angebracht werden, insbesondere Isolier-Träger, auf denen beispielsweise Verstellelemente verschieblich gelagert sind, die zum Betätigen von in der Antenneneinrichtung untergebrachten Phasenschiebern zur Einstellung eines unterschiedlichen Absenkwinkels (Down-Tilt-Winkel) benötigt werden. Darüber hinaus werden derartige Funktionsträger häufig auch verwendet, um daran eine Vielzahl von Kabeln und insbesondere Koaxialkabel oder Streifenleiter etc. zu verankern, die innerhalb der Antenne (in der Regel also vor dem Reflektor und unterhalb des die gesamte Antenneneinrichtung abdeckendem Radoms) verlaufen.

Neben derartigen Kabelhaltern, Haltern für Schubstangen, beispielsweise zur Betätigung der erwähnten Phasenschieber, Halter für Kopplungselemente etc., werden also eine Vielzahl von Trägern verwendet, die nachfolgend der Einfachheit halber kurz als Funktionsträger bezeichnet werden, wie sie beispielsweise auf einem Reflektor, also einem Reflektorblech auf der Strahlerseite des Reflektors, montiert werden.

Dazu werden üblicherweise Standard-Befestigungsmittel oder -Halter aus Kunststoffteilen verwendet, die reflektorseitig mit einem mit Hinterschneidungen versehenen Aufnahmeraum ausgestattet sind, worin beispielsweise eine Mutter, insbesondere eine Aluminiummutter, unverdrehbar gehalten ist. In diese Aluminiummutter wird dann durch eine im Reflektor eingebrachte Bohrung der Schaft der Gewindeschraube von der Rückseite des Reflektors aus eingedreht, bis das Funktionsteil an dem Reflektorblech befestigt ist.

Da andererseits die gesamte Antenneneinrichtung möglichst dicht sein soll, werden in der Regel Schrauben verwendet, die an der Schraubenkopf-Unterseite eine umlaufende Ringnut aufweisen. In dieser Ringnut ist ein O-förmiges gummielastisches Dichtungselement eingelegt. Dadurch wird das gummielastische Element beim Festdrehen der Schraube zwischen der Schraubenkopf-Unterseite und der Reflektor-Rückseite verpresst, so dass über die vom Schraubenschaft durchsetzte Bohrung im Reflektorblech möglichst keine Feuchtigkeit in das Innere des Antennengehäuses (Radoms) eindringen kann.

Zudem besteht ein weiteres Problem in der Regel darin, dass bei derartigen Befestigungsmethoden nicht ausgeschlossen werden kann, dass Intermodulationen auftreten. Derartige Intermodulationen sind aber insbesondere in der Hochfrequenztechnik von Nachteil, vor allem auch auf dem Gebiet der Mobilfunktechnik.

Aus der DE 102 26 668 A1 ist ein Verfahren und eine Vorrichtung zum Herstellen einer Fügeverbindung bekannt geworden. Dabei wird ein Funktionselement mit einem plattenförmigen Bauteil verbunden. Das Material des Bauteils wird dazu mittels eines Durchsetzfügevorgangs unter Ausbildung eines vorstehenden Materialabschnitts so verformt, dass dieser vorstehende Materialabschnitt in ein entsprechend vorgeformtes Loch mit einer Hinterschneidung in dem Funktionselement eingreift, welches mit dem plattenförmigen Bauteil fest verbunden werden soll. Dabei wird mittels des Durchsetzfügevorgangs Material des Bauteils so in das vorgeformte Loch in dem Funktionselement hineingedrängt, dass dadurch eine kraft- und formschlüssige Verbindung zwischen Funktionselement und dem Bauteil entsteht.

Ein Durchsetzfügeverfahren und ein Werkzeug dafür ist auch aus der DE 103 15 724 A1 zu entnehmen. Dabei sollen zwei planparallel aufeinander liegende Platten miteinander verbunden werden, wozu ein entsprechendes Durchsetzfügeverfahren zur Anwendung gelangt.

Ferner soll noch auf die DE 102 26 668 A1 verwiesen werden, die allgemein ein Verfahren und eine Vorrichtung zum Herstellen einer Fügeverbindung zwischen einem Funktionselement, wie zum Beispiel einem Gewindebolzen, und mindestens einem Bauteil, insbesondere in Form eines Bleches beschreibt. Dabei wird das Funktionselement mit einem Loch versehen. Anschließend wird das Material des Bauteils mittels eines Durchsetzfügevorgangs in das Loch des Funktionselements so verdrängt, dass eine kraft- und formschlüssige Verbindung zwischen dem Funktionselement und dem Bauteil entsteht.

Eine spezielle Befestigung einer Leitplanke an einem längs der Leitplanke beabstandeten Pfosten wird in der US 2007/228350 A1 beschrieben. Eine Befestigung der Leitplanke an den die Leitplanke tragenden und im Erdreich verankerten Pfosten kann auf verschiedene Weise erfolgen, beispielsweise mittels Schrauben, mittels separat einsetzbarer Stützelemente, durch Verformung eines eine Bohrung in den tragenden Pfosten hintergreifenden Abschnittes wie aber auch durch die Ausbildung eines Schnappbereiches an der Rückseite der Leitplanke, der in eine topfförmige mit einer Hinterschneidung ausgestatteten Vertiefung in einem die Leitplanke tragenden Pfosten eingreift.

Aufgabe der vorliegenden Erfindung ist es von daher, eine verbesserte Befestigungseinrichtung zu schaffen, die im Falle von Metallblechen bevorzugt angewendet werden kann.

Die Aufgabe wird bezüglich der erfindungsgemäßen Halteund Verankerungseinrichtung mit einem Funktionsteil entsprechend den im Anspruch 1 angegebenen Merkmalen gelöst.

Vorteilhafte Ausgestaltungen der Erfindung sind in den Unteransprüchen angegeben.

Durch die vorliegende Erfindung wird ein völlig neuer Weg, beschritten, der deutliche Vorteile gegenüber dem bisherigen Lösungsweg aufweist.

Erfindungsgemäß wird nämlich vorgeschlagen, an einer Metallplatte, im vorliegenden Fall insbesondere auf dem Gebiet der Mobilfunktechnik, auf einem Reflektorblech einen Halteabschnitt auszubilden, auf welchem dann ein Funktionsträger befestigt werden kann.

Dabei geht die Erfindung davon aus, dass der entsprechende Halteabschnitt auf der Platte bohrungsfrei ausgebildet ist, d.h. völlig dicht ist. In Abweichung zum Stand der Technik muss also keine Bohrung im Blech eingebracht werden, um hier einen Schraubenschaft zur Befestigung eines Funktionsträgers einzuführen. Dadurch wird die Dichtigkeit des Trägerbleches in vollem Umfange erhalten.

Somit ist im Rahmen der Erfindung gewährleistet, dass kein Zusatzteil, wie eine Schraube, eine Mutter etc., notwendig ist.

Die erfindungsgemäße Lösung geht nach einer bevorzugten Ausführungsform ferner davon aus, dass an einem bestimmten Befestigungs- oder Halteabschnitt an der Metallplatte, an der ein Funktionsträger befestigt werden soll, eine Blechprägung eingebracht wird, nämlich eine Blechprägung mit einer Hinterschneidung.

In diese nach Art einer Vertiefung gestalteten Blechprägung mit einer Hinterschneidung kann dann ein Funktionsträger beispielsweise in Form eines Kunststoffteils verankert werden, der befestigungsseitig mit einem Schnapper versehen ist. Dieser Schnapper umfasst bevorzugt zumindest zwei in Umfangsrichtung liegende oder gegenüberliegende Schnappfinger mit in die Hinterschneidung ragenden Vorsprüngen, worüber das Befestigungsteil sicher und fest im Bereich der mit Hinterschneidung versehenen Prägung an der Metallplatte eingesetzt und verankert werden kann.

Im Rahmen der Erfindung ist dabei also ferner realisiert, dass in der mittels des Fügeverfahrens hergestellten, mit einem oder mehreren Hinterschneidungsabschnitten versehenen Vertiefung in einer entsprechend verformten Metallplatte ein Halte- und Verankerungsabschnitt eines Funktionsträgers verankerbar ist, und zwar mittels einer Schnappeinrichtung.

Der Kern der Erfindung liegt dabei darin begründet, dass ein versehentliches Entfernen oder Herausziehen des mit dem Schnapper versehenen Funktionsteils aus der mit einer Hinterschneidung versehenen Vertiefung in Form einer Einprägung verhindert wird. Dazu kann an dem Funktionsteil entsprechend seiner Gestaltung ein Verriegelungselement aufgesetzt werden, das verhindert, dass die nach Art eines Schnappers gebildeten und mit Vorsprüngen versehenen Rastfinger entgegen der Einrastrichtung zurückgezogen und das Funktionsteil abgehoben werden kann.

Dabei kann in einer Variante die Verriegelungseinrichtung beispielsweise einen Stift umfassen, der in eine Zentralbohrung im Funktionsträger axial einführbar ist. Dadurch wird ein rückwärtiger Ausweichraum für die elastischen Schnappfinger versperrt, so dass die gewünschte Sicherungsfunktion erzielt wird.

Die Verriegelungseinrichtung kann aber auch einen Sperrring umfassen, der auf einem Basisabschnitt der Schnappeinrichtung axial verschiebbar geführt und soweit absenkbar ist, dass hierüber die elastisch verformbaren Schnappfinger so gesichert sind, dass deren Schnappnasen nicht aus der zumindest einen Hinterschneidung herausführbar sind.

Ganz allgemein kann insoweit noch angemerkt werden, dass im Rahmen der Erfindung sichergestellt ist, dass ein entsprechendes Funktionsteil auch noch nachträglich an einer entsprechend verformten Metallplatte verankert und eingesetzt werden kann, so dass letztlich keine Fügeverbindung zwischen der Metallplatte und dem Funktionsträger hergestellt werden muss.

Das Funktionsteil selbst kann dabei unterschiedlichst ausgebildet sein, beispielsweise mit einem Querträger etc., um darauf Kabel, axial verschiebliche Schubstangen, Entkopplungselemente etc. zu befestigen.

Bevorzugt besteht die mit einer Hinterschneidung versehene Prägung aus einer Vertiefung gegenüber dem umliegenden Plattenmaterial, beispielsweise in einer rotationssymmetrischen Form oder auch in einer davon abweichenden Form mit unterschiedlicher Längs- oder Quererstreckung. Die Hinterschneidung muss von daher auch nicht umlaufend, sondern bevorzugt an zumindest verschiedenen in Umfangsrichtung versetzt liegenden Stellen ausgebildet sein.

Die Prägung oder Einprägung kann auch so vorgesehen sein, dass sie nicht über die Ebene der Unterseite der Platte übersteht, insbesondere dann, wenn benachbart zu der mit der Hinterschneidung versehenen Prägung der verbleibende Plattenmaterial-Abschnitt in umgekehrter Richtung relativ abgesenkt wird, so dass der entsprechende Halte- und Verankerungsabschnitt mit der mit der Hinterschneidung versehenen vertieften Prägung über dem Reflektormaterial erhaben übersteht.

Schließlich ist auch im Sinne einer funktionellen Umkehrung eine Ausbildung des Halte- und Verankerungsabschnittes derart möglich, dass eine umlaufende vertiefte Prägung gebildet wird, die beispielsweise benachbart zueinander liegende und nicht gegenüberliegende Hinterschneidungen aufweist (weil beispielsweise eine ringförmige Vertiefung ausgebildet ist, bei der die Hinterschneidung in der mittig sitzenden "Insel" vorgesehen ist), so dass ein Schnapper mit aufeinander zu weisenden Vorsprüngen hier aufgesetzt werden kann. Dies kann beispielsweise dadurch realisiert werden, dass eine eher ringförmige Vertiefung als Prägung in das Metallblech eingearbeitet wird, wobei die in der Mitte der ringförmigen, ringähnlichen oder ovalen etc. vertieft ausgebildeten Erhebung eine umlaufende oder abstandsweise Hinterschneidung ausgebildet ist. Grundsätzlich wäre es auch noch möglich und denkbar, dass keine gemeinsame zusammenhängende, insbesondere vertiefte Prägung gegenüber dem umliegenden Plattenmaterial mit einer umlaufenden Hinterschneidung ausgebildet wird, sondern versetzt zueinander liegende Prägungen, Einzel-Prägungen mit zumindest einem Hinterschnitt, so dass je ein Funktionsteil mit entsprechenden, nach Art eines Schnappers ausgebildeten Füßchen aufgesetzt werden kann, so dass die einzelnen Füßchen in jeweils einer ihnen zugeordneten Prägung eingreifen und die dortige Hinterschneidung hintergreifen können.

Die Erfindung wird nachfolgend anhand von Zeichnungen näher erläutert. Dabei zeigen im Einzelnen
- Figur 1:: eine schematische, räumliche Darstellung auf eine Metallplatte mit einem Bereich, der als Halte- und Befestigungsbereich umgeformt werden soll;
- Figur 2:: eine schematische, vertikale Schnittdarstellung durch ein erstes Presswerkzeug zur Herstellung einer Vertiefung in einer Metallplatte als erster Verfahrensschritt;
- Figur 2a:: eine Unteransicht des in Figur 2 gezeigten Stempels;
- Figur 2b:: eine Seitenansicht des in Figur 2 gezeigte Stempels;
- Figur 2c:: eine Seitenansicht der in Figur 2a im Schnitt dargestellten Matrize;
- Figur 2d:: eine Draufsicht auf die Prägefläche der in Figur 2c in Schnittdarstellung wiedergegebenen Matrize;
- Figur 3:: eine vertikale Querschnittsdarstellung durch ein zweites Presswerkzeug zur Durchführung eines nächsten weiteren Verfahrensschrittes unter Umformung der Metallplatte;
- Figur 3a:: eine Querschnittsdarstellung ähnlich zu Figur 3 am Ende der in diesem Schritt durchgeführten Verformung;
- Figur 4:: eine vertikale Querschnittsdarstellung durch das in Figur 3 gezeigte Presswerkzeug nach Abschluss des entsprechenden Verformungsschrittes;
- Figur 5:: eine entsprechende Querschnittsdarstellung unter Verwendung eines dritten Presswerkzeuges vor Durchführung eines nächsten Verformungsschrittes;
- Figur 6:: eine Darstellung eines dritten Presswerkzeuges unter Umformung des im vorausgegangenen Verfahrensschritt hergestellten mit einer Vertiefung versehenen Metallplatte definiertem Öffnungsmaßes;
- Figur 7:: eine entsprechende Darstellung zu Figur 6, während des Abhebvorganges des Presswerkzeuges und insbesondere des Pressstempels;
- Figur 8a:: eine entsprechende Darstellung der durch die vorhergehenden Schritte hergestellten Metallplatte im Querschnitt mit einem Halte- und Befestigungsabschnitt mit Hinterschneidungen im Bereich einer Vertiefung zur Befestigung weiterer Funktionsteile;
- Figur 8b:: eine Draufsicht auf die Darstellung gemäß Figur 8a;
- Figur 9a:: eine schematische vertikale Schnittdarstellung durch das in den vorausgegangenen Schritten entsprechend verformtes Metallblech vor dem Einsetzen eines Verankerungs- und Funktionskörpers in einer ersten Variante;
- Figur 9b:: eine Abwandlung zu der Querschnittsdarstellung zu Figur 9a;
- Figur 10a:: eine entsprechende Darstellung zu Figur 9b nach dem Einsetzen des Funktionskörpers;
- Figur 10b:: eine entsprechende Darstellung zu Figur 9a, und zwar nach dem Einsetzen des Funktionskörpers;
- Figur 10c:: eine entsprechende Darstellung zu Figur 10a, nachdem ein interner Sicherungsstift in die Sicherungsstellung abgesenkt ist;
- Figur 10d:: eine entsprechende Darstellung zu Figur 10b nach Absenkung des Sicherungsstiftes;
- Figur 11a:: eine schematische Querschnittsdarstellung durch eine mit dem erfindungsgemäßen Halte- und Befestigungsabschnitt versehenen Metallplatte, wobei der in der Vertiefung versehene Halte- und Befestigungsabschnitt gegenüber dem umverformten Abschnitt der Metallplatte angehoben ist;
- Figur 11b:: eine Draufsicht auf die Darstellung gemäß Figur 11a;
- Figur 12a:: ein abgewandeltes Ausführungsbeispiel in Querschnittsdarstellung mit einer eher ringkanalförmigen oder ringkanalähnlichen Vertiefung unter Ausbildung eines erhabenen Zentralabschnittes, an welchem die eher voneinander weg weisenden, das heißt vorstehenden Ränder mit den darunter befindlichen Hinterschneidungen versehen ist;
- Figur 12b:: eine Draufsicht auf die Darstellung gemäß Figur 12a; und
- Figur 13:: eine entsprechende Darstellung zu Figur 12a unter Aufsetzung eines Sperringes, der verhindert, dass ein mit Spreizfingern aufgesetzter Funktionskörper auf unbeabsichtigter Weise von dem Halte- und Verankerungsabschnitt abgezogen werden kann.

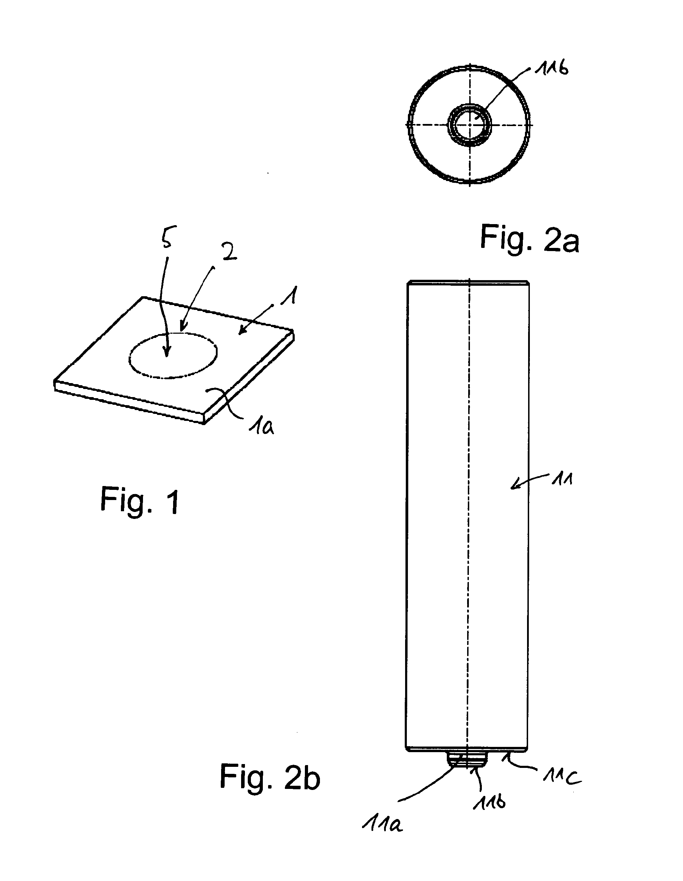

In Figur 1 ist ein schematischer Ausschnitt einer Platte bzw. Metallplatte 1 gezeigt, die teilweise nachfolgend auch als Blech oder Metallblech 1 bezeichnet wird. Umgrenzt ist auf diesem Metallblech ein Bereich 2 gezeigt, in dem beispielsweise ein Halte- und Befestigungsabschnitt 5 gemäß der vorliegenden Erfindung realisiert werden soll.

Auch wenn im vorliegenden Fall nur von einer Metallplatte 1 oder auch von einem Blech oder Metallblech 1 gesprochen wird, so wird darunter jedwede metallische Platte verstanden, die aus Metall oder einer Metalllegierung bestehen kann, beispielsweise aus Eisen oder einer Eisenlegierung, aus Aluminium, Messing, Kupfer oder Mischlegierungen, aus gestanzten und gewalzten Metallblechen oder aus gegossenen Platten, die in einem Gussverfahren hergestellt wurden etc. Einschränkungen bestehen in soweit nicht.

Zur Herstellung des vorstehend erwähnten Halte- oder Befestigungsabschnittes 5 wird beispielsweise bevorzugt wie nachfolgend beschrieben ein Metallblech unter Verwendung eines Presswerkzeuges entsprechend verformt.

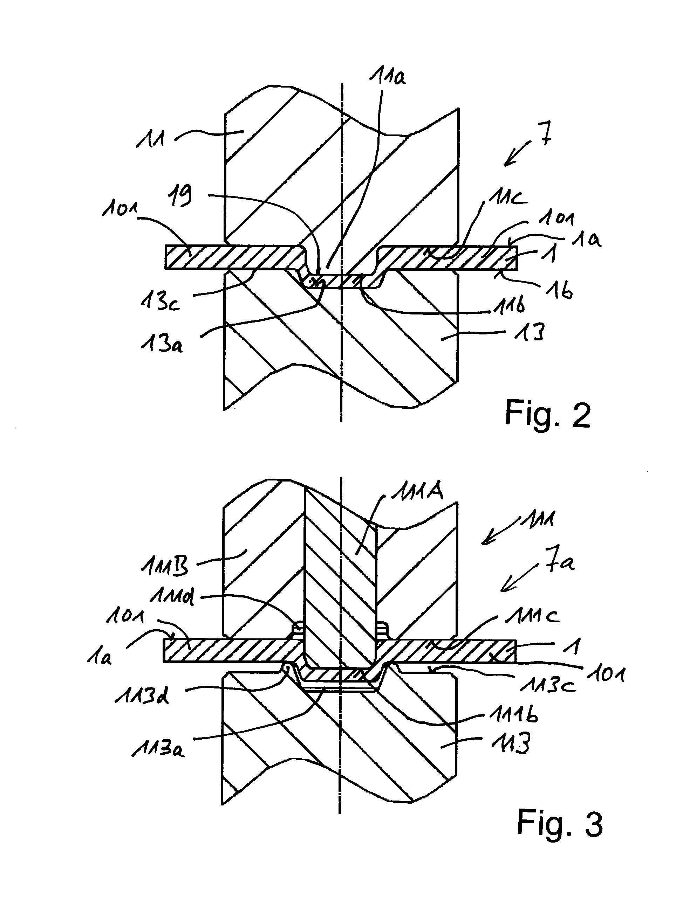

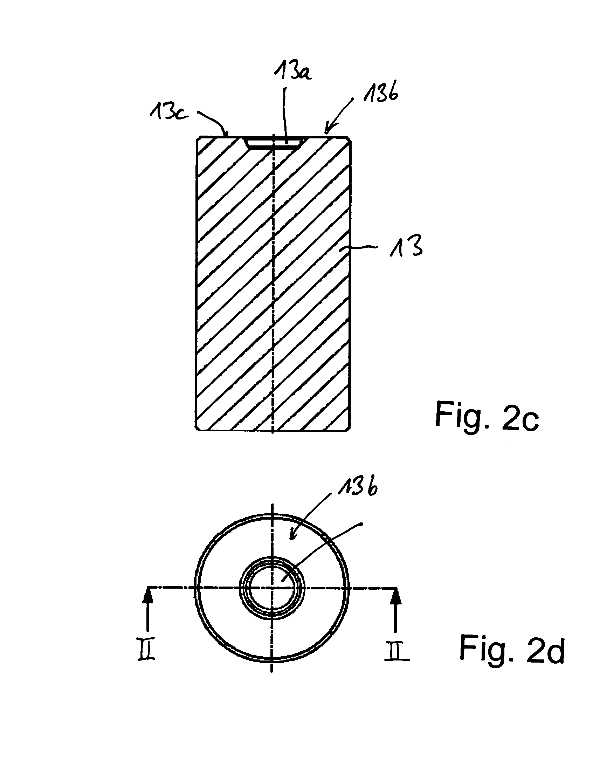

Anhand einer ersten schematischen Querschnittsdarstellung gemäß Figur 2 ist das Presswerkzeug 7 gezeigt, und zwar mit einem ersten Stempel 11 mit in Prägerichtung stirnseitig nach unten vorstehenden Stempelzapfen 11a und der darunter befindlichen Matrize 13 mit einer darin eingebrachten Ausnehmung 13a.

Dabei ist in Ergänzung zu Figur 2 anhand von Figur 2a eine Draufsicht, das heißt Unteransicht auf den ersten Stempel 11 und in Figur 2b eine Seitenansicht auf den Stempel 11 sowie in Figur 2c eine Seitenansicht auf die in Figur 2 verwendete Matrize 13 und in Figur 2d eine Draufsicht auf die Matrize 13 wiedergegeben, wobei die Querschnittsdarstellung gemäß Figur 2c eine Schnittdarstellung längs der Linie II-II in Figur 2b wiedergibt.

In einem ersten Prägeschritt wird dabei der im gezeigten Beispiel oben liegende Stempel 11 relativ gegenüber der Matrize 13 so verfahren, in der Regel nach unten gesenkt, so dass die zwischen der stirnseitigen Prägeseite 11b des Stempelzapfens 11a und der in der Matrizenstirnseite 13b eingebrachte Ausnehmung 13a eine Vertiefung 19 in das Metallblech 1 eingeprägt wird, wie dies in Figur 2 am Ende des Prägevorgangs nach dem Herabsenken des Stempels im Querschnitt zu ersehen ist. Am Ende des Pressvorganges liegt ein unverformter Bereich 101 des Metallbleches 1 zwischen der ringförmigen Stirnseite 11c benachbart zum Stempelzapfen 11a und der ringförmigen Matrizenfläche 13c benachbart zu der Ausnehmung 13a der Matrizenstirnseite 13b (Figur 2c). Mit anderen Worten wird durch den vorstehenden Stempelzapfen 11a Material der Metallplatte 1 in den Bereich der Matrizenausnehmung 13a eingepresst, wodurch im gezeigten Ausführungsbeispiel eine topf- oder zylinderförmige Vertiefung 19 in der Metallplatte oder im Metallblech 1 entsteht.

Die Ausführungsbeispiele sind so beschrieben, dass der Stempel von oben her nach unten in Richtung Matrize abgesenkt wird. Die Ausrichtung kann aber beliebig sein. So kann auch die Matrize oben liegend angeordnet und der Stempel unten liegend vorgesehen sein, wobei sich der Stempel dann von unten nach oben zur Durchführung der Verformung bewegt. Ebenso kann Stempel und Matrize in beliebiger Ausrichtung vorgesehen sein, unter anderem beispielsweise auch in horizontaler Ausrichtung. Einschränkungen bestehen in soweit nicht. Es kommt lediglich auf die relative Verfahrbarkeit von Stempel und Matrize an.

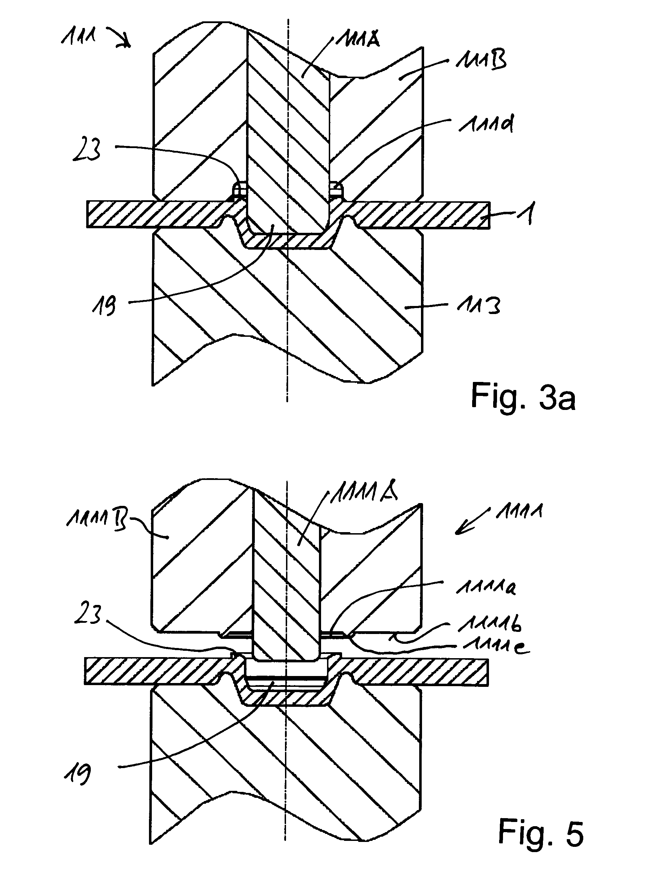

In einem nächsten Presswerkzeug 7a gemäß der schematischen vereinfachten axialen Querschnittsdarstellung nach Figur 3 wird dann ein nächster, hier ein zweiter Prägeschritt durchgeführt, um in dem Halte- und Befestigungsabschnitt 5 einen ringförmigen Material-Überstand 23 am Rand der Vertiefung 19 zu bilden, der über das Niveau der Metallplatte in entgegengesetzter Richtung zur Vertiefung 19 übersteht.

An Stelle der erwähnten vorstehenden beiden hintereinander erfolgenden Prägeschritt könnten die vorstehend genannten beiden Prägeschritte auch in einem einzigen Prägeschritt gemeinsam durchgeführt werden, wenn nämlich in Figur 3 eine entsprechend unverformte Platte 1 zwischen Stempel und Matrize eingefügt und dann der gezeigte Stempel auf die entsprechend geformte Matrize zu, also relativ zu verfahren wird.

Im gezeigten Ausführungsbeispiel ist zur Durchführung des hier erläuterten zweiten Prägeschrittes ein zweigeteilter Stempel 111 vorgesehen, der einen inneren, im gezeigten Ausführungsbeispiel zylinderförmigen Innenstempel 111A und einen diesen umgebenden hohlzylinderförmigen Außenstempel 111B umfasst, die relativ zueinander axial verschieblich sind.

Die darunter befindliche Matrize 113 weist wiederum eine Matrizenvertiefung oder Matrizenausnehmung 113a auf, die jedoch einen über die ringförmige Matrizenfläche 113c überstehenden umlaufenden Prägerand 113d aufweist.

Wird in dieses Presswerkzeug 7a die in dem ersten Verfahrensschritt mit der Vertiefung 19 ausgebildete Metallplatte 1 positioniert und dann der obere Stempel, d.h. in der Regel der Innen- und der Außenstempel 111A, 111B gleichmäßig nach unten auf die Matrize 113 unter Erzeugung hoher press- und Prägekräfte vorbewegt, bis die ringförmige Stirnseite 111c des Außenstempels 111B wiederum den unverformten Materialabschnitt 101 der Metallplatte 1 gegenüber der ringförmigen Stirnseite 113c der Matrize 13 gepresst hält und der vorlaufende Zylinderabschnitt (Stirnseite 111b) des Stempels 111A in die Vertiefung 19 der Metallplatte 1 voll eintaucht, wird durch die Ausgestaltung des erhabenen umlaufenden Randes 113d in der Matrize benachbart zur Matrizenvertiefung 113a ein Anteil des Materials der Platte 1 in die um den Innenstempel 111A umlaufende Ringnut oder Ringvertiefung 111d eingepresst. Der dadurch ausgebildete nach oben hin über die Oberfläche oder -seite 1a der Metallplatte 1 überstehende Wulst, Ring oder Kragen 23 ist in Figur 3a angedeutet, wobei hier der Wulst, Ring oder Kragen 23 in die erwähnte Ringnut oder Ringvertiefung 111d in einer Teilhöhe eingreift.

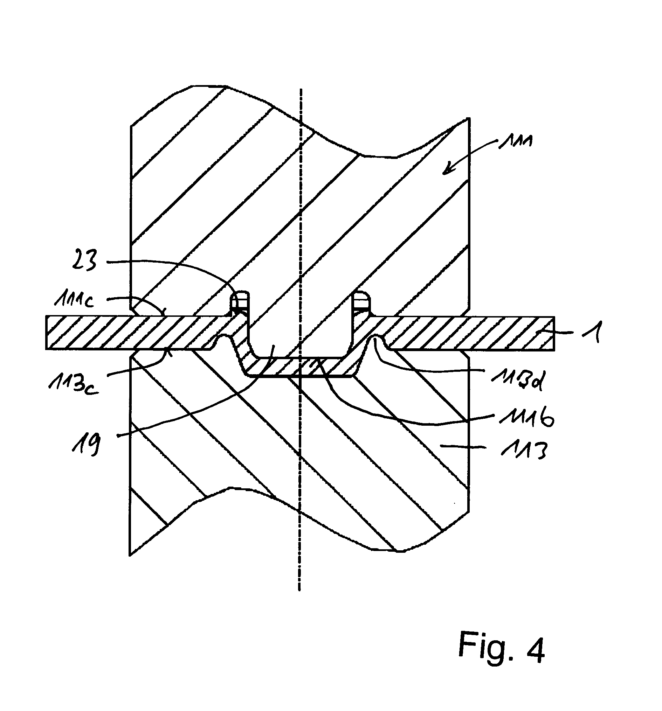

Dabei ist anhand von Figur 4 auch schematisch im Schnitt gezeigt, dass in Abweichung zu der Darstellung gemäß Figur 3 der Stempel nicht zwingend zweigeteilt sein muss sondern auch einteilig ausgebildet sein kann, da es bei diesem Verfahrensschritt nur auf die Gesamt-Gestaltung der stirnseitigen Press-Oberfläche ankommt.

Anschließend wird dann der Stempel 111 mit dem Innen- und Außenstempel 111A, 111B nach oben zurückgefahren, um in einem nächsten Verfahrensschritt gemäß Figur 5 mit einem nächsten Stempel 1111 den nächsten Verformungsschritt durchzuführen.

Gemäß der Darstellung nach Figur 5 wird nunmehr ein Stempel 1111 verwendet, der im gezeigten Ausführungsbeispiel benachbart zum Innenstempel 1111A am Außenstempel 1111B eine stirnseitige Prägeseite 1111a aufweist, das dem außenliegenden Niveau des Stempelrings 1111b entspricht, wobei dazwischenliegend ein umlaufender, leicht vorstehender Prägering 1111e ausgebildet ist. Mit anderen Worten weist also der Außenstempel 1111B eine Stirnseite auf, die grundsätzlich eben gestaltet ist und dabei im Abstand zum Außenumfang des Innenstempels 1111A einen in Präge- und Pressrichtung vorstehenden Prägering 1111e aufweist.

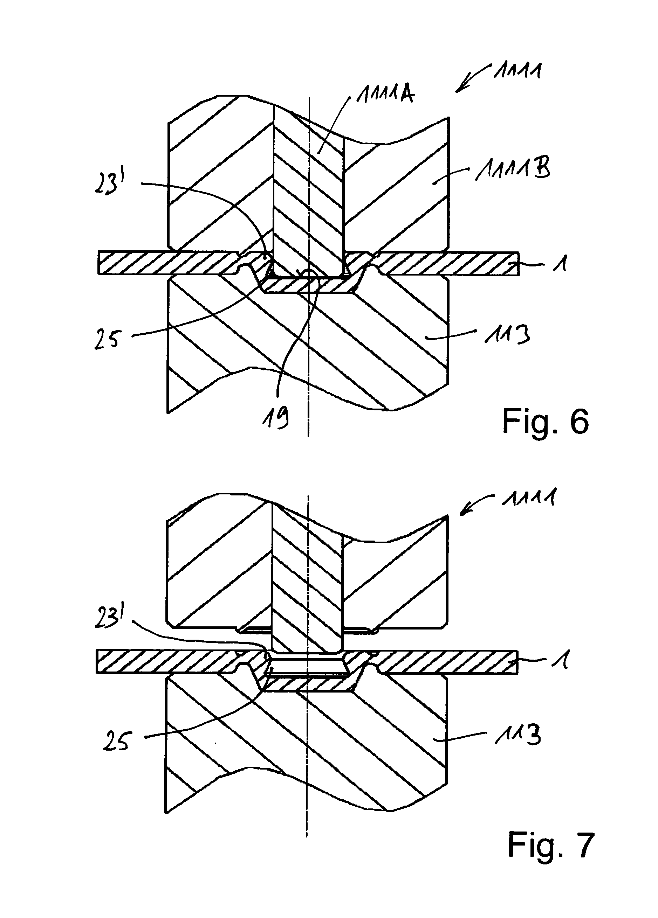

Beim Herabfahren des so gebildeten Stempels 1111 gemäß der Darstellung nach Figur 5 hat dies zur Folge, dass der zuvor ausgebildete erhabene Abschnitt oder Kragen bzw. Ring oder Wulst 23 am Plattenmaterial benachbart zu der Vertiefung 19 (also der über das obere Flächenniveau der Metallplatte überstehende Abschnitt) nunmehr einen radial nach innen vorstehenden Rand 23' bildet, wodurch gleichzeitig eine Hinterschneidung 25 unterhalb des radial vorstehenden Randes 23' in der Vertiefung oder Ausnehmung 19 erzeugt wird (siehe Figur 6). Der umlaufende Rand 23' begrenzt dabei eine Zugangsöffnung 26 zu der Vertiefung 19.

Da auch in diesem Verfahrensschritt der Innenstempel 1111A bis in die Vertiefung 19 hineinragt, wird dadurch eine Kalibrierung des Randes 23', d.h. eine Prägung des Materials der Metallplatte im Bereich der Vertiefung 19 mit einem definierten Öffnungsmaß entsprechend dem Außenmaß des Innenstempels 1111A gewährleistet.

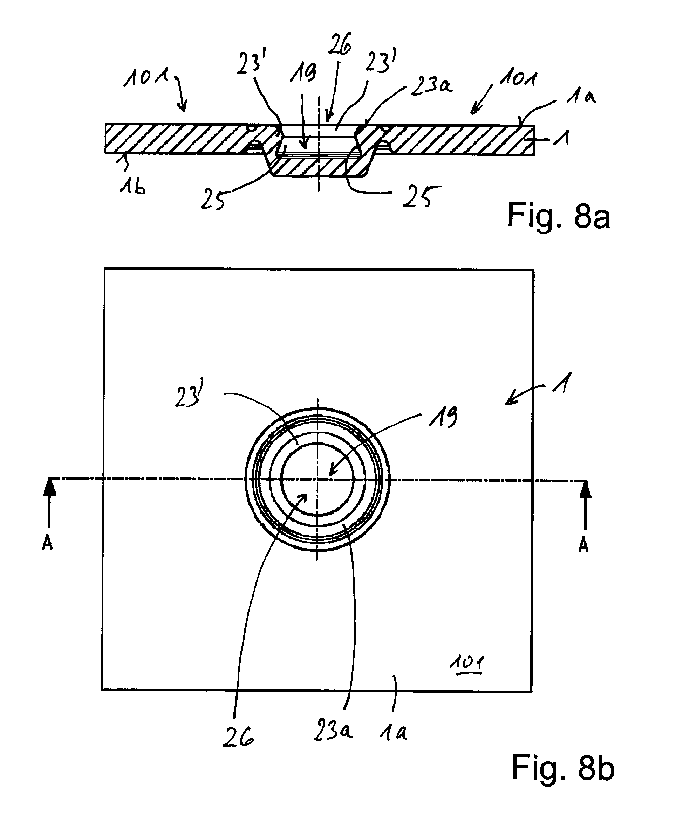

Nach dem entsprechenden Abziehen des Stempels 1111 (Figur 7) und dem Abheben des so geprägten und verformten Plattenmaterials ergibt sich somit also die anhand von Figur 8a wiedergegebene Querschnittsform und die in Figur 8b dargestellte Draufsicht, mit der in der Metallplatte 1 an dem erläuterten Halte- und Befestigungsabschnitt 5 ausgebildeten Vertiefung 19 mit der entsprechenden Hinterschneidung 25. Diese Hinterschneidung 25 ist durch einen radial in die Öffnung der Vertiefung 19 vorstehenden Materialrand 23' gebildet, dessen obere Seite oder Oberfläche 23a bei diesem Ausführungsbeispiel in Höhe der Oberseite 1a der Metallplatte 1 zu liegen kommt (obgleich auch hier gewisse Abweichungen durchaus möglich sind).

An dieser Stelle kann nunmehr ein Funktionsträger 27 leicht befestigt werden, gegebenenfalls lösbar befestigt werden, wobei ein Funktionsträger 27 - was nachfolgend geschildert wird - über die Zugangsöffnung 26 in die Vertiefung 19 eingeführt und dort verankert werden kann.

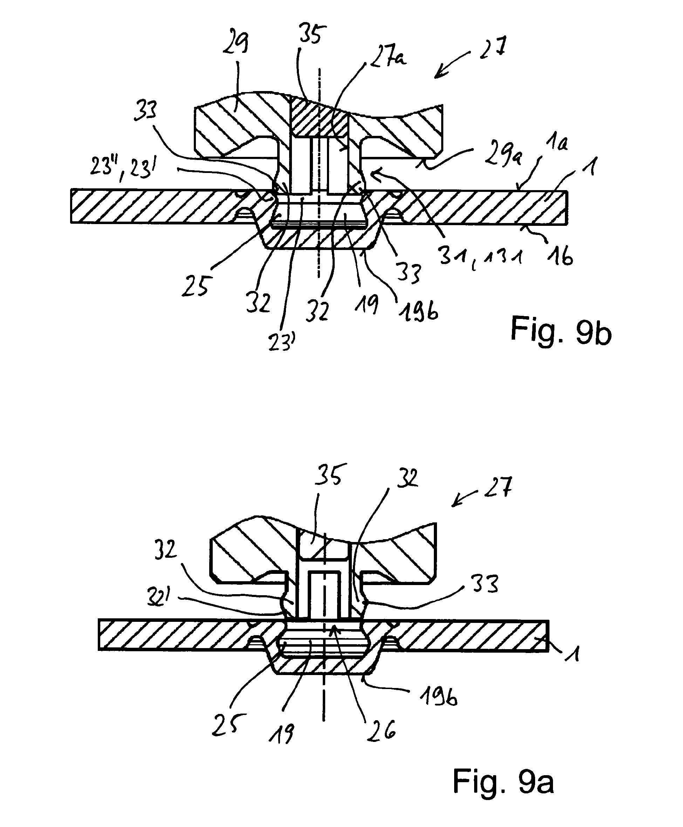

Ein entsprechender Funktionsträger 27 ist in schematischer Seitenansicht in Figur 9a in einem ersten Ausführungsbeispiel und in Figur 9b in leicht abgewandelter Ausführungsform dazu vor dem Einfügen in eine entsprechende Vertiefung 19 in der Metallplatte 1 dargestellt.

Er umfasst einen Basisabschnitt 29, der beispielsweise zylinderförmig gestaltet sein kann. Über seine untere Auflagefläche 29a axial überstehend ist eine Schnappereinrichtung 31 als Verankerungs- oder Halteabschnitt 131 ausgebildet, beispielsweise mit zwei gegenüberliegenden Schnappfingern 32, die elastisch verformbar sind und nach außen vorstehende Schnappnasen 33 aufweisen. Die axiale Länge dieser Schnappnasen 33 entspricht in etwa der Höhe der Vertiefung 19. Der Wirkabstand zwischen der in entgegengesetzter Richtung vorstehenden Schnappnasen 33 entspricht vorzugsweise zumindest dem maximalen Abstand im Bereich der Hinterschneidung unterhalb der Eintrittsöffnung 26 mit dem so gebildeteten Öffnungsrand 23'.

Ein so gebildeter Funktionsträger 27 kann also axial in die Öffnung 26 eingeführt werden, bis der Funktionsträger 27 am Boden der von der Hinterschneidung 25 umgebenen Vertiefung 19 aufsitzt, wobei die zumindest beiden Schnappfinger 32 aufeinander zu verspannt werden, weil die vorlaufenden keilförmigen Flanken 32' der Schnappfinger 32 am Öffnungsrand 23' der Vertiefung 19 auflaufen und dadurch zusammengepresst werden (Figur 9a), wobei dann beim weiteren Einstecken der Rastfinger mit der auflaufenden schrägen Flanke 32' hinter dem verengenden Öffnungsrand 23' sich im Bereich der Hinterschneidung 25 wieder weiten und entspannen und die Schnapper so in der Vertiefung 19 halten. Dabei liegt dann die nach unten weisende umlaufende Anlagefläche oder der Auflagebereich 29a auf der Oberseite 1a der Metallplatte an, wodurch ein fester Sitz gewährleistet ist.

In Abweichung dazu ist bei der Variante gemäß Figur 9b der umlaufende Öffnungsrand 23' aus der Vertiefung 19 nach oben divergierend oder mit einer entsprechenden auseinanderlaufenden Abrundung 23" versehen, die somit im Sinne einer kinematischen Umkehrung den gleichen Effekt wie bei dem Ausführungsbeispiel nach Figur 9a erfüllt, nämlich sicherstellt, dass die entsprechenden Schnappfinger auf diesen abgerundeten Öffnungsrand 23' auflaufen, beim weiteren Einstecken zusammengepresst und bei Erreichen der Hinterschneidung wieder aufgrund der elastischen immanenten Spannung nach außen ausschwenken oder öffnen können, um darüber den Funktionsträger 27 in der Vertiefung 19 sicher und fest zu halten.

Genauso können beide vorstehend genannten Effekte gemäß Figur 9a und 9b gleichzeitig vorgesehen sein, um die Einführbewegung zu erleichtern.

Der guten Ordnung halber wird auch angemerkt, dass nicht zwingend in Umfangsrichtung durch Trennungen oder Trennschlitze voneinander getrennte Schnappfinger ausgebildet sein müssen. Möglich wäre auch, dass die gesamte Schnappeinrichtung 31 als zylinderförmige mit einem umlaufenden Wulst versehene Schnappeinrichtung 31 ausgebildet ist, die beim Aufsetzen auf den Öffnungsrand 23' der mit der Hinterschneidung versehenen Vertiefung insgesamt aufgrund einer immanenten Elastizität zusammengepresst und nach Erreichen der Hinterschneidung in der Vertiefung 19 unter Durchführung einer elastischen Entspannung wieder seine Öffnungslage einnimmt und mit seinem umlaufenden Wulst dadurch den Funktionsträger in der Vertiefung hält. Mit anderen Worten sind also keine Schnappfinger sondern eine elastisch federnde Zylinderwand oder eine elastisch federnder Zylindermantel mit der entsprechend wulstförmigen Ausformung an seiner Außenseite vorgesehen. Weitere Abwandlungen sind möglich, die den gleichen Effekt bewirken.

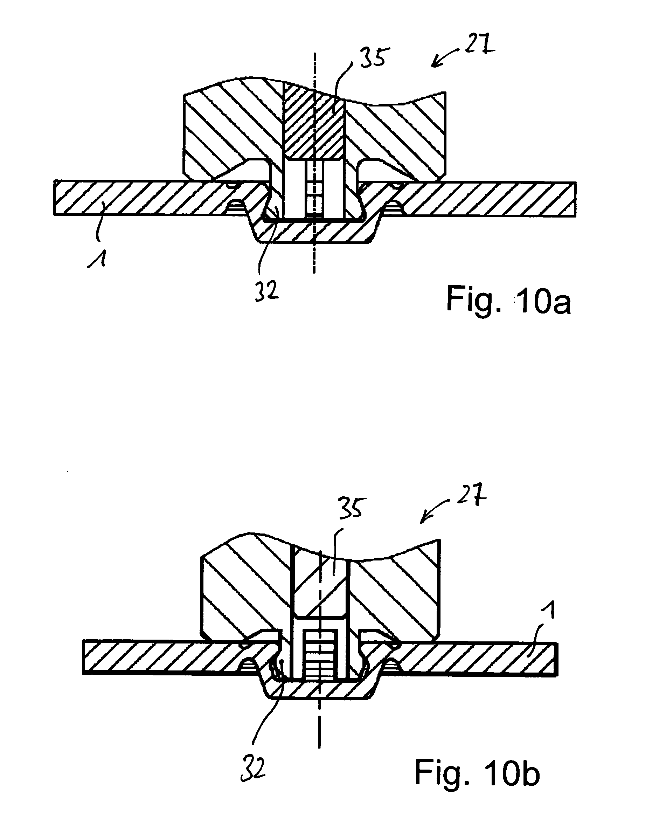

Dabei ist die gesamte Anordnung derart, dass durch die Formgebung der Nasen an dem Schnapper 32 und deren axiale Länge in Bezug auf die mit der Hinterschneidung versehene Vertiefung der Funktionsträger 27 seine Auflagefläche unter Vorspannung an der Oberseite 1a der Metallplatte angepresst gehalten wird (siehe Figur 10a).

Schließlich kann in dem Funktionsträger 27 über eine Zentralbohrung 27a noch ein Sperr-Stift 35 eingefügt werden, der bis in dem Bereich der Schnappfinger 32 eingeführt wird, und der verhindert, dass selbst bei Versuch des Abziehens des Funktionsträgers 27 die Schnappfinger 32 wieder zusamengepresst und der Funktionsträger 27 aus der Vertiefung abgezogen werden kann. Der über die Zentralöffnung 27a und den Funktionsträger 27 eingeführte Stift 35 stellt somit also einen Sperrstift oder Verriegelungsstift dar.

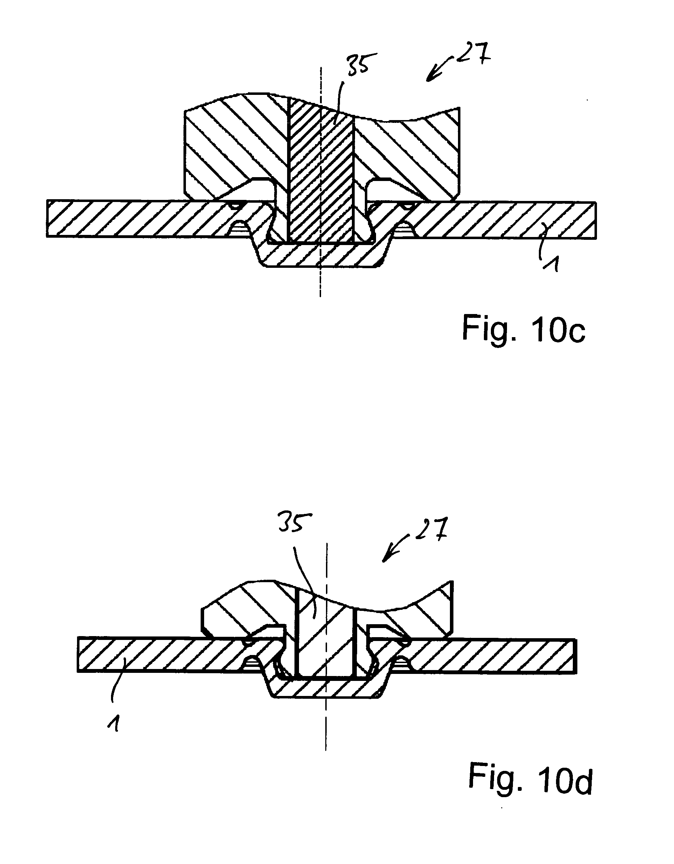

In Figuren 9a und 9b sind entsprechende Darstellungen des Funktionsträgers 27 vor dem Einführen seines Verankerungsabschnittes 131, d.h. vor dem Einführen seiner Schnappeinrichtung 31 in die Vertiefung 19 gezeigt, wobei in Figuren 10a und 10b die entsprechende Darstellung nach dem Einführen der Schnappeinrichtung 31 in die Vertiefung 19, und in Figuren 10c und 10d in die verriegelte Endposition gezeigt ist, in der der erwähnte Sperr-Stift 35 jeweils nach unten durchgestoßen oder herabgesenkt wurde, bis auf den Boden der Vertiefung 19, um die Schnappeinrichtung 31 zu sperren und zu sichern.

Der erwähnte Füll- oder Sperr-Stift 35 kann aber auch integral mit dem Funktionsträger verbunden sein, beispielsweise durch eine dünne Kunststoffbrücke oder über eine filmartige Verbindung. Dadurch ist der Stift unverlierbar in angehobener Position im Funktionsträger gehalten und muss zur Sicherung des Funktionsträgers nur durch ein Werkzeug nach dem Einschnappen des Funktionsträgers von oben nach unten durchgestoßen werden, um den Stift von in seine in Figur 10c oder Figur 10d herabgesenkte Sperrstellung zu überführen, in der er bis in die Vertiefung 19 hineinragt, vorzugsweise bis zum Boden der Vertiefung 19 (siehe Figur 10b).

Allerdings muss der Verankerungs- und Halteabschnitt 131 nicht zwingend eine Schnappeinrichtung 31 unter Ausbildung von ein- oder mehreren Schnappfingern oder Schnappzungen 32 umfassen. Möglich ist auch, dass der Verankerungs- oder Halteabschnitt 131 des Funktionsträgers 27 eine elastische Halte- oder Schnappeinrichtung 131 in Form einer umlaufenden Verankerungswand bzw. in Zylinderform mit einem außen umlaufenden oder abschnittsweise versetzt zueinander liegenden Wulst umfasst, wobei der so gebildete Verankerungsoder Halteabschnitt 131 so in die Vertiefung 19 in der Metallplatte 1 einsetzbar ist, dass der außen umlaufende oder abschnittsweise in Umlaufrichtung versetzt liegende Wulst in die Hinterschneidung 25 in der Vertiefung 19 eingreift und dadurch den Funktionsträger 27 fest und sicher hält.

Abweichend vom gezeigten Ausführungsbeispiel muss die Vertiefung 19 nicht zwingend rotationssymmetrisch sein. Sie kann beispielsweise in Draufsicht eine polygonale Form aufweisen oder eine Formgebung mit größerer Länge als Breite. Auch eine ovale Formgebung ist denkbar. Bevorzugt würde dann jedoch ein Funktionsträger 27 verwendet werden, dessen Schnappeinrichtung 31 mit den zugehörigen Schnappfingern 32 dieser Grundform so angenähert ist, dass der Funktionsträger 27 möglichst unverschieblich und unverdrehbar in der so gebildeten Vertiefung 19 sitzt.

Möglich ist auch, dass zum Beispiel zwei oder mehrere entsprechende Prägungen in einem vorbestimmten Abstand zueinander in einem Blech, insbesondere Reflektorblech, eingebracht werden, beispielsweise durch ein entsprechend doppelt oder mehrfach ausgestaltetes Prägewerkzeug, so dass ein Funktionsträger dort eingesetzt werden kann, der über zwei oder mehrere beabstandete Verankerungsabschnitte mit jeweils zumindest einem oder mehreren Schnappfingern versehen ist bzw. sind, wobei beispielsweise jedem Schnappfinger eine separate Prägevertiefung 19 zugeordnet ist, in die er eingreifen kann. Dadurch kann ein Funktionsträger ebenfalls insgesamt unverdrehbar fest am Metallblech 1 gehalten und verankert werden.

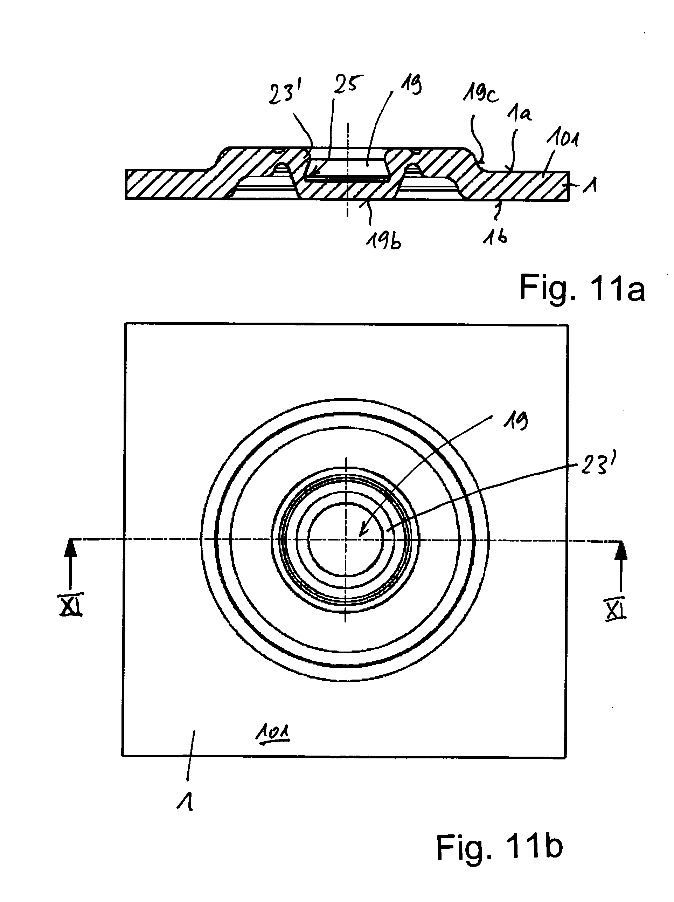

Im gezeigten Ausführungsbeispiel kommt die Unterseite 19b der Vertiefung 19 des Metallbleches 1 im Bereich des Halte- und Befestigungsabschnittes 15 auf einem Niveau zu liegen, das tiefer liegt als die Unterseite 1b der Metallplatte benachbart zu der Vertiefung 19. Dies muss nicht zwingend so sein, da beispielsweise der Halte- und Befestigungsabschnitt 5 vor Beginn der erläuterten Verformung und Prägung, am Ende oder in einem Zwischenschritt oder gemeinsam, d.h. gleichzeitig mit der Durchführung eines anderen Prägeschrittes, so verformt werden kann, dass der gesamte Halte- und Befestigungsabschnitt - wie in Figur 11a angedeutet ist - über umlaufende fallende Schultern 19c auf einem höheren Niveau zu liegen kommt. Dabei kann die Anordnung derart sein, dass beispielsweise die Unterseite 19b der Vertiefung 19 in gleicher Höhe wie die Unterseite 1b des Metallbleches benachbart zur Vertiefung zu liegen kommt, oder sogar noch höher liegt, wie in Figur 11a im Querschnitt und in Figur 11b in Draufsicht gezeigt.

Es wird auch angemerkt, dass die Hinterschneidung 25 nicht umlaufend im Bereich der Vertiefung 19 ausgebildet sein muss. Sie kann auch abschnittsweise ausgebildet sein. Sie muss zumindest in jenen Bereichen vorhanden sein, in denen die Schnappfinger 32 sich im Bereich der Hinterschneidung verankern sollen.

Abweichend vom gezeigten Ausführungsbeispiel muss auch nicht eine einzige Vertiefung 19 mit einer entsprechenden Hinterschneidung vorgesehen sein, in die eine Schnappeinrichtung insgesamt eingeführt wird. Möglich wäre auch, dass beispielsweise in zwei, drei oder mehreren versetzt zueinander liegenden Bereichen (vorzugsweise nicht auf einer Linie nebeneinander liegend, sondern in sämtlichen Anordnungen zueinander vorgesehen) entsprechende Vertiefungen 19 in das Metallblech 1 eingebracht werden, jeweils mit einer Hinterschneidung, wobei dann ein Funktionsträger 27 mit z. B. zwei, drei oder mehreren Füßchen aufgesetzt werden könnte, wobei jeweils ein Fuß mit einem Schnappfinger in eine der Vertiefungen eingeführt wird. Allerdings erfordert dies die Verwendung von kompliziert gestalteten Präge- und Presswerkzeugen.

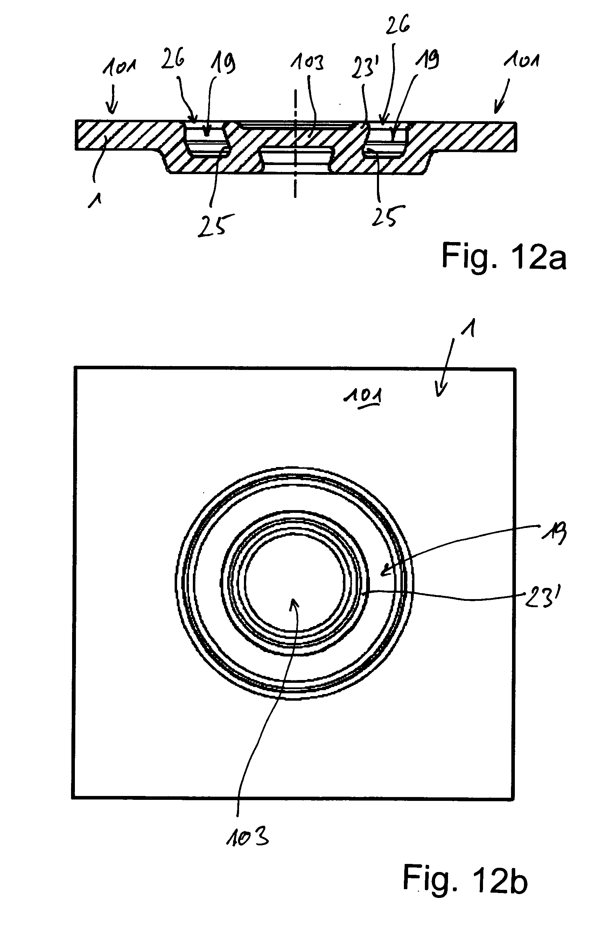

Anhand von Figur 12a ist im Querschnitt und in Figur 12b in Draufsicht ein abgewandeltes Ausführungsbeispiel eines durch Prägen und Umformen verformtes Metallblech 1 gezeigt, welches ebenfalls einen Halte- und Befestigungsabschnitt 5 im Querschnitt wiedergibt. Bei dieser Ausführungsform ist quasi im Sinne einer Umkehrung eine ringförmige (also allgemein eine ringkanalförmige oder ringkanalähnliche etc.) Vertiefung erzeugt worden, die in ihrem mittleren Bereich eine umlaufende Hinterschneidung 25 aufweist. In Figur 12b ist eine entsprechende Draufsicht auf dieses Ausführungsbeispiel wiedergegeben. Beim Verformen des nach oben vorstehenden Randes 23 in den in Richtung der ringförmigen Vertiefung vorstehenden umgelegten Randes 23' unter Ausbildung der darunter befindlichen Hinterschneidung kann dann bevorzugt ein mit einer entsprechender topfförmigen Ausnehmung versehener Stempel verwendet werden, der als Kalibrierstempel zur Begrenzung des von einem Zentralabschnitt eher radial nach außen vorstehenden Randes 23' dient.

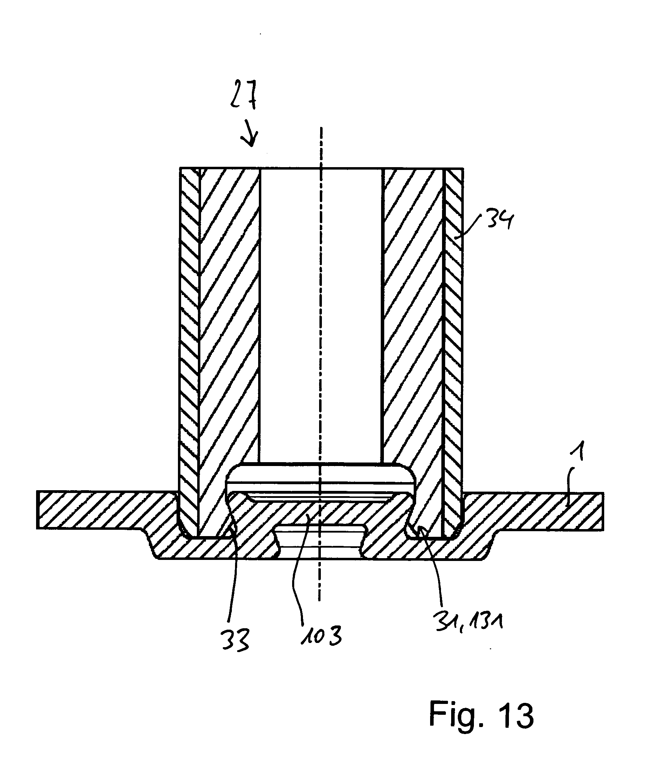

Wie anhand von Figur 13 dargestellt ist, kann nunmehr ein entsprechender Funktionsträger 27 auf diesem Halte- und Befestigungsabschnitt 5 verankert werden, wobei der Funktionsträger 27, in diesem Falle als Verankerungs- und Halteabschnitt 131 eine Schnappeinrichtung 31, mit zumindest zwei oder beispielsweise drei oder mehreren in Umfangsrichtung versetzt liegenden Schnappfinger 32 aufweist, die radial nach innen vorstehende Schnappnasen 33 aufweisen. Diese würden dann in der Hinterschneidung 25 nach dem Aufsetzten zu liegen kommen, halten also den Funktionsträger 27 an dem pilzartig erhabenen Mittelabschnnitt fest. In diesem Falle könnte als Sicherung gegen ein unbeabsichtigtes Abziehen des Funktionsträgers ein entsprechender Ring 34 oder ein Hohlzylinder oder eine Klammer oder dgl. nach unten verschoben werden, der möglicherweise sogar bis in die Vertiefung 19 mit einschiebbar ist und die Schnappfinger gegen ein radiales Verschwenken nach außen hin sichert, so dass der Funktionsträger fest und unbeabsichtigt nicht abziehbar am Metallblech 1, insbesondere einem Reflektorblech, gehalten ist.

Es ist allgemein von einem Rand 23' und einer entsprechenden Hinterschneidung 25 gesprochen worden. Genauso können aber auch voneinander beabstandete Randabschnitte 23' unter Ausbildung von jeweils darunter befindlichen Hinterschneidungen 25 vorgesehen sein.

Im Rahmen der Ausführungsbeispiele ist beschrieben worden, dass eine entsprechende Vertiefung in einem Metallteil bevorzugt in drei Schritten durchgeführt werden kann, insbesondere in aufeinanderfolgenden drei Schritten auch unter Verwendung unterschiedlicher Pressstempel bzw. gegebenenfalls auch unterschiedlicher Matrizen.

Wie bereits erwähnt wurde, kann der erläuterte erste und zweite Verfahrensschritt in der Regel problemlos zu einem einzigen Verfahrensschritt zusammengefasst werden, in welchem auch der umlaufende Wulst oder Rand 23 benachbart zur Vertiefung 19 gebildet wird.

Der Vollständigkeit halber wird auch erwähnt, dass letztlich auch alle drei Verfahrensschritte bis zur Herstellung der endgültigen mit der Überschneidung versehenen Vertiefung in einem einzigen Verfahrensschritt durchgeführt werden können, insbesondere dann, wenn ein Presswerkzeug beispielsweise mit einem Pressstempel verwendet wird, welches zusätzliche bewegbare Verformungsteile umfasst, um beispielsweise den in diesem einzigen Verfahrensschritt zwischenzeitlich ausgebildeten und nach oben eventuell überstehenden Wulst dann gleichzeitig oder im Zuge des gleichen Verfahrensschrittes umzulegen und die gewünschte Hinterschneidung zu bilden.

## Patentansprüche

1. Halte- und Verankerungseinrichtung mit Funktionsträger, mit den folgenden Merkmalen:
- die Halte- und Verankerungseinrichtung umfasst einen Halte- und Verankerungsabschnitt an einer Metallplatte (1),
- der Halte- und Verankerungsabschnitt umfasst eine in der Metallplatte (1) eingearbeitete Vertiefung (19),
- die Vertiefung (19) weist benachbart zur Oberseite (1a) der Metallplatte (1) liegend einen umlaufenden Rand oder beabstandet zueinander liegende Randabschnitte (23') auf,
- unterhalb des umlaufenden Randes oder der Randabschnitte (23') ist eine Hinterschneidung (25) oder mehrere Hinterschneidungsabschnitte (25) ausgebildet,
- die Vertiefung (19) ist bohrungsfrei oder durchtrittsöffnungsfrei ausgestaltet,
- in dem Halte- und Verankerungsabschnitt ist ein Funktionsträger (27) verankert oder verankerbar, und
- der Funktionsträger (27) weist eine Schnappeinrichtung (31) mit vorstehenden Schnappnasen (33) zur Verankerung in der zumindest einen Hinterschneidung (25) auf,
**dadurch gekennzeichnet, dass** eine Verriegelungseinrichtung vorgesehen ist, die ein unbeabsichtigtes Abziehen der Schnappeinrichtung (31) aus der Vertiefung (19) über den die Hinterschneidung (25) überdeckenden Rand (23') hinaus verhindert.

2. Halte- und Verankerungseinrichtung mit Funktionsträger nach Anspruch 1, **dadurch gekennzeichnet, dass** die Schnappeinrichtung (31) zumindest zwei versetzt zueinander liegende elastisch verformbare Schnappfinger (32) umfasst, die mit jeweils quer dazu vorragenden Schnappnasen (33) versehen sind, die unter elastischer Verformung über den die jeweilige Hinterschneidung (25) überragenden Rand (23') in die zugehörige Vertiefung (19) in der Metallplatte (1) einsetzbar sind.

3. Halte- und Verankerungseinrichtung mit Funktionsträger nach Anspruch 2, **dadurch gekennzeichnet, dass** die Schnappfinger (32) von einem Zentralabschnitt mit Radialkomponenten nach außen vorstehenden Schnappnasen (32) umfassen.

4. Halte- und Verankerungseinrichtung mit Funktionsträger nach Anspruch 2, **dadurch gekennzeichnet, dass** die Schnappeinrichtung (31) Schnappfinger (32) umfasst, die zumindest mit einer Radialkomponente aufeinander zuweisende Schnappnasen (33) umfassen.

5. Halte- und Verankerungseinrichtung mit Funktionsträger nach einem der Ansprüche 1 bis 4, **dadurch gekennzeichnet, dass** die Verriegelungseinrichtung einen Stift (35) umfasst, der in eine Zentralbohrung (27a) im Funktionsträger (27) axial einführbar ist, wodurch ein rückwärtiger Ausweichraum für die elastischen Schnappfinger (32) versperrt ist, so dass die Schnappnasen (33) aus der zumindest einen Hinterschneidung (25) nicht heraus verstellbar sind.

6. Halte- und Verankerungseinrichtung mit Funktionsträger nach einem der Ansprüche 1 bis 4, **dadurch gekennzeichnet, dass** die Verriegelungseinrichtung einen Sperrring (34) umfasst, der auf einen Basisabschnitt (29) der Schnappeinrichtung (31) axial verschieblich geführt und soweit absenkbar ist, wodurch die elastisch verformbaren Schnappfinger (32) so gesichert sind, dass deren Schnappnasen (33) nicht aus der zumindest einen Hinterschneidung (25) herausführbar sind.

7. Halte- und Verankerungseinrichtung mit Funktionsträger nach einem der Ansprüche 1 bis 5, **dadurch gekennzeichnet, dass** der Funktionsträger (27) als Verankerungs- oder Halteabschnitt (131) eine elastisch umlaufende Verankerungswand vorzugsweise in Zylinderform mit einem außen umlaufenden oder abschnittweise versetzt zueinander liegenden Wulst umfasst, wobei der so gebildete Verankerungs- oder Halteabschnitt (131) so in die Vertiefung (19) einsetzbar ist, dass der außen umlaufende oder abschnittsweise in Umlaufsrichtung versetzt liegende Wulst in die Hinterschneidung (25) in der Vertiefung (19) eingreift und dadurch den Funktionsträger (27) fest und sicher hält.

8. Halte- und Verankerungseinrichtung mit Funktionsträger nach einem der Ansprüche 1 bis 7, **dadurch gekennzeichnet, dass** die Vertiefung (19) in Draufsicht kreisförmig, oval, polygonal oder dergleichen ausgestaltet ist.

9. Halte- und Verankerungseinrichtung mit Funktionsträger nach einem der Ansprüche 1 bis 8, **dadurch gekennzeichnet, dass** die Oberseite (23a) des Randes (23') zumindest näherungsweise in Höhe der Oberseite (1a) des unverformten Bereiches (101) der Metallplatte (1) zu liegen kommt.

10. Halte- und Verankerungseinrichtung mit Funktionsträger nach einem der Ansprüche 1 bis 9, **dadurch gekennzeichnet, dass** die Vertiefung (19) als umlaufende Vertiefung (19), vorzugsweise als ringförmige Vertiefung, ausgebildet ist, und zwar unter Zurücklassung eines mittleren Materialbereiches (103), an welchem ein umlaufender Rand (23') oder in Umfangsrichtung versetzt liegende Randabschnitte (23') vorgesehen sind, wobei unterhalb des umlaufenden Randes (23') oder die in Umfangsrichtung versetzt liegenden Randabschnitte (23') eine Hinterschneidung (25) oder Hinterschneidungsabschnitten (25) vorgesehen ist bzw. sind.

11. Halte- und Verankerungseinrichtung mit Funktionsträger nach einem der Ansprüche 1 bis 10, **dadurch gekennzeichnet, dass** mehrere versetzt zueinander liegende Vertiefungen (19) ausgebildet sind, die zumindest abschnittsweise Ränder (23') aufweisen, die unter Ausbildung einer Hinterschneidung (25) in die dadurch begrenzte Zugangsöffnung (26) vorragen.

12. Halte- und Verankerungseinrichtung mit Funktionsträger nach einem der Ansprüche 1 bis 11, **dadurch gekennzeichnet, dass** die Metallplatte (1) ein Reflektorblech ist, welches die Außenhaut einer Antenne, insbesondere einer Mobilfunkantenne bildet.

13. Halte- und Verankerungseinrichtung mit Funktionsträger nach einem der Ansprüche 1 bis 12, **dadurch gekennzeichnet, dass** ein unverformter Bereich der Metallplatte (1) gegebenenfalls unter Verformung eines Übergangsbereiches zu dem Halte- und Verankerungsabschnitt mit der Vertiefung (19) so angeordnet ist, dass die Ebene des unverformten Bereiches der Metallplatte (1)
a) oberhalb der Ebene der Zugangsöffnung (26), oder
b) in Höhe der Ebene der Zugangsöffnung (26), oder
c) unterhalb der Ebene der Zugangsöffnung (26), oder
d) unterhalb des Niveaus des Bodens (19a) der Vertiefung (19)
zu liegen kommt.

## Claims

1. Retaining and anchoring device comprising a functional support, having the following features:
- the retaining and anchoring device comprises a retaining and anchoring portion on a metal plate (1),
- the retaining and anchoring portion comprises a recess (19) made in the metal plate (1),
- adjacent to the upper side (1a) of the metal plate (1), the recess (19) comprises a circumferential edge or edge portions (23') which are spaced apart from one another,
- below the circumferential edge or the edge portions (23'), there is formed an undercut (25) or a plurality of undercut portions (25),
- the recess (19) is configured so as to be free from holes or passages,
- a functional support (27) is or can be anchored in the retaining and anchoring portion, and
- the functional support (27) comprises a snap-in means (31) having protruding snap-in lugs (33) for anchoring in the at least one undercut (25),
**characterised in that** a locking device is provided which prevents unintentional removal of the snap-in means (31) from the recess (19) beyond the edge (23') which covers the undercut (25).

2. Retaining and anchoring device comprising a functional support according to claim 1, **characterised in that** the snap-in means (31) comprises at least two mutually offset, elastically deformable snap-in fingers (32) which are provided with snap-in lugs (33) which protrude transversely thereto in each case and, with elastic deformation via the edge (23') projecting beyond the respective undercut (25), can be inserted into the associated recess (19) in the metal plate (1).

3. Retaining and anchoring device comprising a functional support according to claim 2, **characterised in that** the snap-in fingers (32) comprise snap-in lugs (32) protruding outwards from a central portion having radial components.

4. Retaining and anchoring device comprising a functional support according to claim 2, **characterised in that** the snap-in means (31) comprises snap-in fingers (32) which, at least on one radial component, have snap-in lugs (33) which point towards each other.

5. Retaining and anchoring device comprising a functional support according to any of claims 1 to 4, **characterised in that** the locking device comprises a pin (35) which can be axially inserted into a central hole (27a) in the functional support (27), whereby a rearward withdrawal space for the resilient snap-in fingers (32) is blocked so that the snap-in lugs (33) cannot be moved out of the at least one undercut (25).

6. Retaining and anchoring device comprising a functional support according to any of claims 1 to 4, **characterised in that** the locking device comprises a blocking ring (34) which is axially displaceably guided on a base portion (29) of the snap-in means (31) and can be lowered, so that the elastically deformable snap-in fingers (32) are secured in such a way that the snap-in lugs (33) thereof cannot be guided out of the at least one undercut (25).

7. Retaining and anchoring device comprising a functional support according to any of claims 1 to 5, **characterised in that** the functional support (27) in the form of an anchoring or retaining portion (131) comprises a resiliently circumferential anchoring wall, which is preferably cylindrical and has a bead which is outwardly circumferential or mutually offset at least in portions, it being possible to insert the anchoring or retaining portion (131) formed in this way into the recess (19) such that the bead which is outwardly circumferential, or offset in the circumferential direction at least in portions, engages in the undercut (25) in the recess (19) and consequently holds the functional support (27) firmly and securely.

8. Retaining and anchoring device comprising a functional support according to any of claims 1 to 7, **characterised in that**, in plan view, the recess (19) is designed so as to be circular, oval, polygonal or the like.

9. Retaining and anchoring device comprising a functional support according to any of claims 1 to 8, **characterised in that** the upper side (23a) of the edge (23') comes to rest at least approximately at the level of the upper side (a1) of the undeformed region (101) of the metal plate (1).

10. Retaining and anchoring device comprising a functional support according to any of claims 1 to 9, **characterised in that** the recess (19) is configured as a circumferential recess (19), preferably as an annular recess, which specifically leaves a central material region (103) on which a circumferential edge (23') or edge portions (23') which are offset in the circumferential direction is/are provided, an undercut (25) or undercut portions (25) being provided below the circumferential edge (23') or edge portions (23') which are offset in the circumferential direction.

11. Retaining and anchoring device comprising a functional support according to any of claims 1 to 10, **characterised in that** a plurality of mutually offset recesses (19) are formed which, at least in portions, have edges (23') which, by forming an undercut (25), project into the access opening (26) delimited thereby.

12. Retaining and anchoring device comprising a functional support according to any of claims 1 to 11, **characterised in that** the metal plate (1) is a reflector sheet which forms the outer skin of an antenna, in particular a mobile radio antenna.

13. Retaining and anchoring device comprising a functional support according to any of claims 1 to 12, **characterised in that** an undeformed region of the metal plate (1) is arranged, optionally by deforming a transitional region to the retaining and anchoring portion having the recess (19), in such a way that the plane of the undeformed region of the metal plate (1) comes to rest
a) above the plane of the access opening (26), or
b) at the level of the plane of the access opening (26), or
c) below the plane of the access opening (26), or
d) below the level of the base (19a) of the recess (19).

## Revendications

1. Dispositif de retenue et d'ancrage équipé d'un support de fonction, avec les caractéristiques suivantes :
- le dispositif de retenue et d'ancrage comprend une section de retenue et d'ancrage au niveau d'une plaque métallique (1),
- le dispositif de retenue et d'ancrage comprend un évidement (19) inséré dans la plaque métallique (1),
- l'évidement (19) présente des sections de rebord éloignées les unes des autres ou un rebord tournant à plat, adjacents à la partie supérieure (1a) de la plaque métallique (1),
- une contre-dépouille (25) ou plusieurs sections de contre-dépouilles (25) sont formées en-dessous du rebord tournant ou des sections de rebord (23'),
- l'évidement (19) est conçu sans alésage ou sans ouverture de passage,
- un support de fonction (27) est ancré ou peut être ancré dans la section de retenue et d'ancrage, et
- le support de fonction (27) présente un dispositif encliquetable (31) avec des taquets encliquetables (33) saillants destinés à être ancrés dans au moins une contre-dépouille (25),
**caractérisé en ce qu'**un dispositif de verrouillage est prévu, lequel empêche un retrait non intentionnel du dispositif encliquetable (31) de l'évidement (19) via le rebord (23') recouvrant la contre-dépouille (25).

2. Dispositif de retenue et d'ancrage équipé d'un support de fonction selon la revendication 1, **caractérisé en ce que** le dispositif encliquetable (31) comprend au moins deux doigts encliquetables (32) déformables élastiques, décalés l'un par rapport à l'autre, lesquels sont prévus avec chacun des taquets encliquetables (33) saillants transversaux, lesquels taquets peuvent être insérés dans l'évidement (19) correspondant de la plaque métallique (1) par une déformation élastique via le rebord (23') saillant dans la contre-dépouille (25) correspondante.

3. Dispositif de retenue et d'ancrage équipé d'un support de fonction selon la revendication 2, **caractérisé en ce que** les doigts encliquetables (32) comprennent des taquets encliquetables (32) saillants vers l'extérieur par rapport à une section centrale avec des composants radiaux.

4. Dispositif de retenue et d'ancrage équipé d'un support de fonction selon la revendication 2, **caractérisé en ce que** le dispositif encliquetable (31) comprend des doigts encliquetables (32), lesquels comprennent au moins des taquets encliquetables (33) assignés les uns aux autres avec un composant radial.

5. Dispositif de retenue et d'ancrage équipé d'un support de fonction selon l'une quelconque des revendications 1 à 4, **caractérisé en ce que** le dispositif de verrouillage comprend une cheville (35), qui peut être introduite axialement dans un alésage central (27a) dans le support de fonction (27), un espace d'évitement arrière prévu pour un doigt encliquetable (32) élastique étant obstrué, de sorte que les taquets encliquetables (33) ne peuvent pas être ajustés en dehors d'au moins une contre-dépouille (25).

6. Dispositif de retenue et d'ancrage équipé d'un support de fonction selon l'une quelconque des revendications 1 à 4, **caractérisé en ce que** le dispositif de verrouillage comprend un anneau de blocage (34), lequel se déplace axialement sur une section de base (29) du dispositif encliquetable (31) et peut être abaissé jusqu'à un certain point, les doigts encliquetables (32) déformables élastiques étant fixés de sorte que leurs taquets encliquetables (33) ne peuvent pas être sortis d'une contre-dépouille (25) au moins.

7. Dispositif de retenue et d'ancrage équipé d'un support de fonction selon l'une quelconque des revendications 1 à 5, **caractérisé en ce que** le support de fonction (27) comprend comme section d'ancrage ou de retenue (131) une paroi d'ancrage tournante élastique, de préférence en forme de cylindre, avec un renflement décalé en forme de tronçon ou tournant vers l'extérieur, la section d'ancrage ou de retenue (131) ainsi formée pouvant être introduite dans l'évidement (19), de sorte que le renflement décalé en forme de tronçon ou tournant vers l'extérieur dans le sens de rotation s'engrène dans la contre-dépouille (25) dans l'évidement (19) et retient et fixe ainsi le support de fonction (27).

8. Dispositif de retenue et d'ancrage équipé d'un support de fonction selon l'une quelconque des revendications 1 à 7, **caractérisé en ce que** l'évidement (19) a, vu de dessus, la forme d'un cercle, est ovale, polygonal ou a une forme similaire.

9. Dispositif de retenue et d'ancrage équipé d'un support de fonction selon l'une quelconque des revendications 1 à 8, **caractérisé en ce que** la partie supérieure (23a) du rebord (23') se situe au moins approximativement à hauteur de la partie supérieure (1a) de la zone non déformée (101) de la plaque métallique (1).

10. Dispositif de retenue et d'ancrage équipé d'un support de fonction selon l'une quelconque des revendications 1 à 9, **caractérisé en ce que** l'évidement (19) est formé comme évidement tournant (19), de préférence comme évidement en forme d'anneau et, une zone centrale de matériau est laissée, au niveau de laquelle un rebord tournant (23') ou des sections de rebord (23') décalées dans le sens de rotation sont prévus, une contre-dépouille (25) ou des sections de contre-dépouilles (25) étant prévues en-dessous du rebord tournant (23') ou des sections de rebord (23') décalées dans le sens de rotation.

11. Dispositif de retenue et d'ancrage équipé d'un support de fonction selon l'une quelconque des revendications 1 à 10, **caractérisé en ce que** plusieurs évidements (19) décalés les uns par rapport aux autres sont conçus, lesquels présentent au moins des rebords (23') en tronçons, lesquels dépassent dans l'ouverture d'accès ainsi limitée par la formation d'une contre-dépouille (25).

12. Dispositif de retenue et d'ancrage équipé d'un support de fonction selon l'une quelconque des revendications 1 à 11, **caractérisé en ce que** la plaque métallique (1) est une tôle réfléchissante qui forme la membrane extérieure d'une antenne, notamment d'une antenne de téléphonie mobile.

13. Dispositif de retenue et d'ancrage équipé d'un support de fonction selon l'une quelconque des revendications 1 à 12, **caractérisé en ce qu'**une zone non déformable de la plaque métallique (1) est disposée, le cas échéant par déformation d'une zone de transition par rapport à la section de retenue et d'ancrage avec l'évidement (19), de sorte que le niveau de la zone non déformée de la plaque métallique (1) se situe
a) au-dessus du niveau de l'ouverture d'accès (26), ou
b) à hauteur du niveau de l'ouverture d'accès (26), ou
c) en-dessous du niveau de l'ouverture d'accès (26), ou
d) en-dessous du niveau du fond (19a) de l'évidement (19).
